# EUROPÄISCHE PATENTSCHRIFT

(11) **EP 3 343 681 B1**
(45) Veröffentlichungstag und Bekanntmachung des Hinweises auf die Patenterteilung: **30.04.2025**
(21) Anmeldenummer: 17210697.3
(22) Anmeldetag: 27.12.2017
(51) Int. Cl.: H01M 8/0662

(54) **VERFAHREN ZUR REGENERATION EINES BRENNSTOFFZELLENSYSTEMS**
METHOD FOR REGENERATING A FUEL CELL SYSTEM
PROCÉDÉ DE RÉGÉNÉRATION D'UN EMPILEMENT DE CELLULES COMBUSTIBLES

(30) Priorität: 28.12.2016 DE 102016226240
(43) Veröffentlichungstag der Anmeldung: 04.07.2018
(73) Patentinhaber: Robert Bosch GmbH, 70442 Stuttgart (DE)
(72) Erfinder: Domaschke, Norbert, 71229 Leonberg (DE); Carre, Maxime, 70469 Stuttgart (DE)

(56) Entgegenhaltungen:
- WO-A1-02/02208
- DE-A1- 10 040 011
- DE-A1- 10 121 604
- DE-A1- 10 130 776
- DE-A1- 102012 201 755

## Beschreibung

### Stand der Technik

Aus dem Stand der Technik sind Brennstoffzellensysteme bekannt, wobei Funktionseinheiten, wie beispielsweise Brennstoffzellen, Entschwefelungseinheiten und/oder weitere Reaktoren, in definierten zeitlichen Abständen ausgetauscht und/oder ausgebaut und regeneriert werden müssen.

Aus DE 100 40 011 A1 ist eine Brennstoffzellenanordnung mit einem Schwefelfilter bekannt, an welchem unmittelbar davor und danach jeweils ein Drei-Wege-Ventil angeordnet ist, um ein Regeneriergas über spezielle Zu- und Ableitungen ausschließlich durch den Schwefelfilter zu führen.

Aus DE 101 21 604 A1 ist eine Brennstoffzellenanordnung mit einem Schwefelfilter bekannt, an welchem unmittelbar davor und danach jeweils ein UmschaltVentil angeordnet ist, um ein Regeneriergas über spezielle Zu- und Ableitungen ausschließlich durch den Schwefelfilter zu führen.

Aus DE 10 2012 201755 A1 ist ein Verfahren zur Regeneration einer Entschwefelungseinrichtung eines Brennstoffzellensystems bekannt, bei welchem ein Regenerierungsmittel durch eine Brennstoffzelle des Brennstoffzellensystems hindurch abgeleitet wird.

Aus DE 101 30 776 A1 ist ein Brennstoffzellensystem bekannt, welches wenigstens zwei parallel geschaltete Einrichtungen zum Entfernen von Schwefel umfasst. Hierzu sind Umschaltmittel vorgesehen, über die die Einrichtungen zum Entfernen des Schwefels alternierend zumindest zeitweilig mit der Brennstoffzuleitung verbunden oder verbindbar sind.

Aus WO 02/02208 A1 ist ein regenerierbarer Gasentschwefler für Brennstoffzellen mit zwei Granulatbehältern bekannt, welche über Schalter abwechselnd in einen Brennstoff oder ein Regenerationsmittel schaltbar sind.

### Offenbarung der Erfindung

Die Erfindung geht aus von einem Verfahren zur Regeneration eines Brennstoffzellensystems, wobei das Brennstoffzellensystem wenigstens eine regenerationsfähige Funktionseinheit aufweist, wobei die Funktionseinheit in einem eingebauten Zustand mittels zumindest eines Regenerationsmittels zumindest teilweise regeneriert wird.

Es wird vorgeschlagen, dass ein Brennstoffzellenabgas und ein Regenerationsabgas über ein als 3-Wege-Ventil ausgebildetes Fluidventil des Brennstoffzellensystems oder über ein als 2-Wege-Ventil ausgebildetes erstes Fluidventil und ein als 2-Wege-Ventil ausgebildetes zweites Fluidventil des Brennstoffzellensystems oder über genau ein als 2-Wege-Ventil ausgebildetes Fluidventil des Brennstoffzellensystems zusammengeführt und mittels einer Ableitung abgeführt werden. Die Funktionseinheit wird in einem eingebauten Zustand und insbesondere in zumindest einem Verfahrensschritt, insbesondere bei einem Regenerationsvorgang, mittels zumindest eines Regenerationsmittels zumindest teilweise, vorzugsweise zu wenigstens einem Großteil und besonders bevorzugt vollständig, regeneriert, insbesondere unter Erzeugung eines Regenerationsabgases. Insbesondere wird die Funktionseinheit zur zumindest teilweisen Regeneration dabei mit dem Regenerationsmittel beaufschlagt, geflutet und/oder durchspült. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Unter einem "Brennstoffzellensystem" soll in diesem Zusammenhang insbesondere ein System verstanden werden, welches zu einer, insbesondere stationären und/oder mobilen, Gewinnung elektrischer und/oder thermischer Energie vorgesehen ist. Insbesondere umfasst das Brennstoffzellensystem dazu wenigstens eine Brennstoffzelleneinheit, welche insbesondere als, insbesondere regenerationsfähige, Funktionseinheit ausgebildet sein kann. Insbesondere ist die Brennstoffzelleneinheit zumindest dazu vorgesehen, zumindest eine chemische Reaktionsenergie zumindest eines, vorteilhaft kontinuierlich zugeführten, Brennstoffs und zumindest eines Oxidationsmittels, wie beispielsweise Luft und/oder Sauerstoff, in elektrische und/oder thermische Energie umzuwandeln. Insbesondere kann die Brennstoffzelleneinheit genau eine Brennstoffzelle und/oder vorzugsweise eine Vielzahl von Brennstoffzellen aufweisen, welche vorteilhaft in einem Brennstoffzellenstack angeordnet sein können. Ferner ist die zumindest eine Brennstoffzelleneinheit bevorzugt als alkalische Brennstoffzelle (AFC), als Polymerelektrolyt-Brennstoffzelle (PEMFC), als Magnesium-Luft-Brennstoffzelle (MAFC) und/oder vorteilhaft als Festoxid-Brennstoffzelle (SOFC) ausgebildet. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Brennstoff" soll in diesem Zusammenhang insbesondere ein chemischer Stoff, vorteilhaft Erdgas, verstanden werden, dessen gespeicherte chemische Energie sich durch Umsetzung in der Brennstoffzelleneinheit in nutzbare Energie, insbesondere in elektrische und/oder thermische Energie, umwandeln lässt. Insbesondere kann der Brennstoff dabei Zusatzstoffe und/oder Hilfsstoffe umfassen, wie beispielsweise Odorierungsstoffe und/oder Schwefelverbindungen. Zudem kann das Brennstoffzellensystem wenigstens eine weitere, vorteilhaft regenerationsfähige, Funktionseinheit, insbesondere eine Fördereinheit, wie beispielsweise ein Gebläse und/oder eine Pumpe, eine Ventileinheit, einen Wärmeübertrager, eine Reformereinheit, eine Brennereinheit, wie beispielsweise einen Schutzgasbrenner und/oder einen Nachbrenner, eine Entschwefelungseinheit, wie beispielsweise eine Kaltentschwefelungseinheit und/oder eine Heißentschwefelungseinheit, und/oder einen weiteren Reaktor umfassen.

Darüber hinaus umfasst das Brennstoffzellensystem bevorzugt eine Regenerationseinheit, welche vorteilhaft zumindest teilweise einstückig mit der Funktionseinheit und/oder wenigstens einer weiteren Komponente des Brennstoffzellensystems ausgebildet ist und insbesondere dazu vorgesehen ist, das Verfahren zur Regeneration des Brennstoffzellensystems und insbesondere der wenigstens einen regenerationsfähigen Funktionseinheit auszuführen. Insbesondere ist die Regenerationseinheit somit dazu vorgesehen, die Funktionseinheit in einem eingebauten Zustand mit dem Regenerationsmittel zu beaufschlagen, zu fluten und/oder zu durchspülen und insbesondere mittels des Regenerationsmittels zumindest teilweise, vorzugsweise zu wenigstens einem Großteil und besonders bevorzugt vollständig, zu regenerieren. Insbesondere kann die Regenerationseinheit dazu eine Fördereinheit und/oder eine Recheneinheit umfassen. Unter einer "Recheneinheit" soll dabei insbesondere eine elektrische und/oder elektronische Einheit verstanden werden, welche insbesondere einen Informationseingang, eine Informationsverarbeitung und eine Informationsausgabe aufweist. Vorteilhaft weist die Recheneinheit ferner zumindest einen Prozessor, zumindest einen Speicher, zumindest ein Ein- und/oder Ausgabemittel, zumindest ein Betriebsprogramm, zumindest eine Regelroutine, zumindest eine Steuerroutine, zumindest eine Berechnungsroutine und/oder zumindest eine Auswerteroutine, insbesondere zur zumindest teilweise automatischen und/oder automatisierten, Durchführung des Verfahrens zur Regeneration des Brennstoffzellensystems, auf. Darunter, dass ein Objekt mit einem weiteren Objekt "zumindest teilweise einstückig ausgebildet" ist soll in diesem Zusammenhang insbesondere verstanden werden, dass die Objekte zumindest ein gemeinsames Bauteil aufweisen und/oder zumindest ein Bauteil des Objekts und/oder das Objekt einstückig mit zumindest einem Bauteil des weiteren Objekts und/oder dem weiteren Objekt verbunden und/oder ausgebildet ist. Bevorzugt sind jedoch sämtliche Bauteile des Objekts einstückig mit zumindest einem Bauteil des weiteren Objekts ausgebildet. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss hergestellt.

Des Weiteren soll unter einem "Regenerationsmittel" insbesondere ein, insbesondere reaktives, Mittel verstanden werden, welches, insbesondere bei dem Regenerationsvorgang, der Funktionseinheit zugeführt wird und insbesondere dazu vorgesehen ist, eine Reaktion, bevorzugt eine Oxidation, in der Funktionseinheit zu bewirken, insbesondere derart, dass die Funktionseinheit zumindest teilweise regeneriert wird. Darunter, dass eine Funktionseinheit "regeneriert wird" soll insbesondere verstanden werden, dass die Funktionseinheit widerhergestellt und/oder zumindest ein, insbesondere reaktives, Funktionsmittel der Funktionseinheit, welches insbesondere in einem Normalbetriebsmodus des Brennstoffzellensystems, in welchem insbesondere Energie erzeugt wird, zumindest teilweise verbraucht und/oder umgewandelt wird, zumindest teilweise wiederhergestellt und/oder wieder aufbereitet wird. Unter einem "eingebauten Zustand" einer Funktionseinheit soll ferner insbesondere ein Zustand verstanden werden, in welchem die Funktionseinheit mit wenigstens einer weiteren Funktionseinheit und/oder wenigstens einer weiteren Komponente des Brennstoffzellensystems fluidtechnisch verbunden ist. Durch diese Ausgestaltung kann insbesondere eine Effizienz, insbesondere eine Energieeffizienz, eine Umsetzungseffizienz, eine Leistungseffizienz, eine Wartungseffizienz, eine Bauteileeffizienz, eine Bauraumeffizienz und/oder eine Kosteneffizienz, verbessert werden. Insbesondere kann die Funktionseinheit dabei vorteilhaft klein dimensioniert und/oder ausgelegt werden, da eine reaktive Kapazität der Funktionseinheit nicht über eine gesamte Einsatzdauer des Brennstoffzellensystems benötigt wird, sondern vorteilhaft regeneriert werden kann. Zudem kann eine vorteilhaft schnelle Wartung erreicht werden, da vorteilhaft auf einen Ausbau und/oder einen Austausch von Funktionseinheiten verzichtet werden kann. Darüber hinaus können vorteilhaft Kosten und/oder ein benötigter Bauraum reduziert werden.

Das Regenerationsmittel könnte beispielsweise flüssig ausgebildet sein. Vorzugsweise wird als Regenerationsmittel jedoch ein Gas verwendet, wodurch vorteilhaft eine Reaktionsfähigkeit des Regenerationsmittels verbessert werden kann. Insbesondere ist das Regenerationsmittel in diesem Fall gasförmig ausgebildet.

Darüber hinaus wird vorgeschlagen, dass das Regenerationsmittel Sauerstoff umfasst. Bevorzugt wird dabei als Regenerationsmittel ein sauerstoffhaltiges Gas und besonders bevorzugt Luft verwendet. Hierdurch kann insbesondere eine für eine Regeneration benötigte Oxidationsreaktion bewirkt werden. Zudem können insbesondere Kosten vorteilhaft reduziert werden.

Ferner wird vorgeschlagen, dass die Funktionseinheit in zumindest einem Normalbetriebsmodus, insbesondere dem bereits zuvor genannten Normalbetriebsmodus, von zumindest einem Brennstoff, insbesondere dem bereits zuvor genannten Brennstoff, durchströmt wird. Die Funktionseinheit könnte dabei als Brennstoffzelleneinheit ausgebildet und insbesondere zu einer Umsetzung des Brennstoffs in Energie vorgesehen sein. Vorzugsweise ist die Funktionseinheit jedoch fluidtechnisch nach und/oder bevorzugt vor der Brennstoffzelleneinheit angeordnet. Vorzugsweise wird der Brennstoff dabei in der Funktionseinheit aufbereitet. In diesem Fall kann die Funktionseinheit vorteilhaft als Reformereinheit, als Entschwefelungseinheit und/oder als weiterer Reaktor ausgebildet sein. Hierdurch kann insbesondere eine Funktionalität des Brennstoffzellensystems und/oder eine Leistungseffizienz verbessert werden.

Darüber hinaus wird vorgeschlagen, dass, insbesondere zur zumindest teilweisen Regeneration der Funktionseinheit und insbesondere in zumindest einem Verfahrensschritt, mittels des Regenerationsmittels wenigstens ein Reststoff zumindest eines Brennstoffs, insbesondere des bereits zuvor genannten Brennstoffs, in der Funktionseinheit oxidiert wird. Der Reststoff kann dabei insbesondere Kohlenstoff und/oder Kohlenstoffverbindungen entsprechen und beispielsweise als Ablagerung in der Funktionseinheit vorliegen. Insbesondere kann der Reststoff auch zumindest teilweise einem Zusatzstoff und/oder Hilfsstoff des Brennstoffs, wie beispielsweise einem Odorierungsstoff und/oder einer Schwefelverbindung, entsprechen. Hierdurch kann insbesondere eine vorteilhafte schnelle und/oder einfache Regeneration der Funktionseinheit erreicht werden.

Die Funktionseinheit könnte beispielsweise als Brennstoffzelleneinheit, als Reformereinheit und/oder als weiterer Reaktor ausgebildet sein. Gemäß einer besonders bevorzugten Ausgestaltung der Erfindung wird jedoch vorgeschlagen, dass die Funktionseinheit als Entschwefelungseinheit und besonders vorteilhaft als Heißentschwefelungseinheit ausgebildet ist. In diesem Fall kann der Reststoff besonders bevorzugt Zinksulfid entsprechen, welches insbesondere bei einer Entschwefelung des Brennstoffs in der als Entschwefelungseinheit ausgebildeten Funktionseinheit gebildet wird und bevorzugt bei dem Regenerationsvorgang zu Zinkoxid und Schwefeloxid oxidiert wird. Unter einer "Entschwefelungseinheit" soll in diesem Zusammenhang insbesondere eine Einheit mit zumindest einem Funktionsmittel verstanden werden, welche dazu vorgesehen ist, vorzugsweise durch zumindest ein physikalisches und/oder chemisches Adsorptionsverfahren und/oder Absorptionsverfahren, einen Volumen- und/oder Molanteil an Schwefelverbindungen in dem Brennstoff unter einen festgelegten Grenzwert zu senken und vorzugsweise zu wenigstens einem Großteil aus dem Brennstoff zu entfernen. Vorzugsweise ist die Entschwefelungseinheit dabei dazu vorgesehen, Schwefelverbindungen in dem Brennstoff mit Wasserstoff in Schwefelwasserstoff zu wandeln, welches anschließend mit in der Entschwefelungseinheit vorhandenem Zinkoxid zu Wasser und Zinksulfid reagiert. Insbesondere entspricht das Zinkoxid dabei einem Funktionsmittel der als Entschwefelungseinheit ausgebildeten Funktionseinheit. Hierdurch kann insbesondere eine vorteilhafte Regeneration einer als Entschwefelungseinheit ausgebildeten Funktionseinheit erreicht werden.

Des Weiteren wird vorgeschlagen, dass das Regenerationsmittel und/oder zumindest ein durch das Regenerationsmittel erzeugtes Regenerationsabgas, insbesondere in zumindest einem Verfahrensschritt, zumindest abschnittsweise durch wenigstens eine mit einer Brennstoffzelleneinheit, insbesondere der bereits zuvor genannten Brennstoffzelleneinheit, fluidtechnisch verbundene Fluidleitung, insbesondere eine Brennstoffzuleitung, eine Oxidationsmittelzuleitung, eine Abgasleitung und/oder eine Rezirkulationsleitung, geleitet wird. Insbesondere kann das Brennstoffzellensystem dabei die Fluidleitung umfassen. Hierdurch kann insbesondere ein vorteilhaft bauraumeffizientes und/oder bauteileeffizientes Brennstoffzellensystem bereitgestellt werden. Zudem kann vorteilhaft eine Anzahl an zusätzlich benötigten Bauteilen reduziert werden.

In einer bevorzugten Ausgestaltung der Erfindung wird vorgeschlagen, dass das Regenerationsmittel, insbesondere in zumindest einem Verfahrensschritt, mittels wenigstens einer Heizeinheit auf eine Regenerationstemperatur, vorteilhaft zumindest 450° und besonders vorteilhaft zumindest 480°C, erhitzt wird, bevorzugt zeitlich vor einer Zuführung zu der Funktionseinheit und/oder in der Funktionseinheit. Insbesondere kann das Brennstoffzellensystem die Heizeinheit umfassen. Insbesondere kann die Regenerationseinheit zu einer Ansteuerung der Heizeinheit vorgesehen sein. Besonders bevorzugt ist die Heizeinheit dabei in die Funktionseinheit integriert, wodurch insbesondere eine besonders energieeffiziente Heizeinheit bereitgestellt werden kann. Insbesondere ist die Heizeinheit dabei dazu vorgesehen, das Regenerationsmittel vor einer Zuführung zu der Funktionseinheit und/oder in der Funktionseinheit auf die Regenerationstemperatur zu erhitzen. Hierdurch kann insbesondere eine vorteilhaft schnelle und/oder einfache Erhitzung des Regenerationsmittels erreicht werden, insbesondere unabhängig von einem Betrieb des Brennstoffzellensystems.

Weiter wird vorgeschlagen, dass zumindest ein durch das Regenerationsmittel erzeugtes Regenerationsabgas, insbesondere in zumindest einem Verfahrensschritt, mittels wenigstens einer Filtereinheit gefiltert wird, vorteilhaft zur Reduzierung und/oder Entfernung von, insbesondere gelösten, Reststoffen und vorteilhaft Schwefelverbindungen. Insbesondere kann das Brennstoffzellensystem die Filtereinheit umfassen. Insbesondere ist die Filtereinheit dabei dazu vorgesehen, ein durch das Regenerationsmittel erzeugtes Regenerationsabgas, vorteilhaft zur Reduzierung und/oder Entfernung von, insbesondere gelösten, Reststoffen und vorteilhaft Schwefelverbindungen, zu filtern. Hierdurch können vorteilhaft Schadstoffe aus dem Regenerationsabgas vor einem Entfernen aus dem Brennstoffzellensystem entfernt werden. Zudem kann insbesondere ein vorteilhaft umweltfreundliches Brennstoffzellensystem bereitgestellt werden.

Wird die Funktionseinheit in einem von einem Normalbetriebsmodus, insbesondere dem bereits zuvor genannten Normalbetriebsmodus, verschiedenen Regenerationsbetriebsmodus zumindest teilweise regeneriert, kann insbesondere ein von einem Betrieb unabhängige Regeneration erreicht werden. Zudem können vorteilhaft bestehende Leitungen und/oder Komponenten des Brennstoffzellensystems für die Regeneration verwendet werden, wodurch vorteilhaft Zusatzkosten minimiert werden können. Vorteilhaft ist zumindest die Brennstoffzelleneinheit in dem Regenerationsbetriebsmodus unbetrieben, bevorzugt zumindest derart, dass kein Brennstoff in der Brennstoffzelleneinheit umgewandelt und/oder durch die Brennstoffzelleneinheit keine Energie erzeugt wird.

In einer weiteren Ausgestaltung der Erfindung wird vorgeschlagen, dass mittels einer Detektionseinheit wenigstens eine Regenerationskenngröße erfasst wird und die Funktionseinheit, bevorzugt zumindest teilweise automatisch und/oder automatisiert, zumindest teilweise regeneriert wird, falls die Regenerationskenngröße außerhalb eines Sollwertintervalls liegt. Insbesondere kann das Brennstoffzellensystem die Detektionseinheit umfassen. Insbesondere ist die Detektionseinheit dabei dazu vorgesehen, wenigstens eine Regenerationskenngröße zu erfassen. Insbesondere kann die Regenerationseinheit zu einer Ansteuerung der Detektionseinheit vorgesehen sein und/oder zu einer Auswertung der Regenerationskenngröße. Unter einer "Regenerationskenngröße" soll dabei insbesondere eine Kenngröße verstanden werden, welche insbesondere mit einem Betriebsparameter der Funktionseinheit, beispielsweise mit einer Menge eines Funktionsmittels der Funktionseinheit und/oder eines in der Funktionseinheit angesammelten Reststoffs des Brennstoffs, und/oder der Brennstoffzelleneinheit, wie beispielsweise einer Heizeffizienz, korreliert ist. Insbesondere kann wenigstens anhand der Regenerationskenngröße und insbesondere durch Abgleich mit dem Sollwertintervall ermittelt werden, ob ein Regenerationsvorgang, insbesondere zur Regeneration der Funktionseinheit, initiiert werden soll. Bevorzugt kann die Regenerationseinheit wenigstens anhand der Regenerationskenngröße und insbesondere durch Abgleich mit dem Sollwertintervall ermitteln, ob ein Regenerationsvorgang, insbesondere zur Regeneration der Funktionseinheit, initiiert werden soll. Hierdurch kann insbesondere eine Schädigung und/oder Degenerierung wenigstens einer Komponente des Brennstoffzellensystems verhindert werden.

Darüber hinaus wird vorgeschlagen, dass die Funktionseinheit in regelmäßigen zeitlichen Abständen zumindest teilweise regeneriert wird, bevorzugt zumindest teilweise automatisch und/oder automatisiert. Alternativ oder zusätzlich kann eine Regeneration der Funktionseinheit jedoch auch bei einer Wartung und/oder manuell erfolgen. Hierdurch kann insbesondere ein gleichbleibender Betrieb gewährleistet werden.

Das Verfahren zur Regeneration des Brennstoffzellensystems und das Brennstoffzellensystem sollen hierbei nicht auf die oben beschriebene Anwendung und Ausführungsform beschränkt sein. Insbesondere können das Verfahren zur Regeneration des Brennstoffzellensystems und das Brennstoffzellensystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematisch dargestelltes Brennstoffzellensystem mit einer regenerationsfähigen Funktionseinheit,
- Fig. 2: ein beispielhaftes Ablaufdiagramm eines Verfahren zur Regeneration des Brennstoffzellensystems,
- Fig. 3: ein weiteres Ausführungsbeispiel eines Brennstoffzellensystems mit einer regenerationsfähigen Funktionseinheit,
- Fig. 4: ein weiteres Ausführungsbeispiel eines Brennstoffzellensystems mit einer regenerationsfähigen Funktionseinheit,
- Fig. 5: ein weiteres Ausführungsbeispiel eines Brennstoffzellensystems mit einer regenerationsfähigen Funktionseinheit,
- Fig. 6: ein weiteres Ausführungsbeispiel eines Brennstoffzellensystems mit einer regenerationsfähigen Funktionseinheit,
- Fig. 7: ein weiteres Ausführungsbeispiel eines Brennstoffzellensystems mit einer regenerationsfähigen Funktionseinheit,
- Fig. 8: ein weiteres Ausführungsbeispiel eines Brennstoffzellensystems mit einer regenerationsfähigen Funktionseinheit,
- Fig. 9: ein weiteres Ausführungsbeispiel eines Brennstoffzellensystems mit einer regenerationsfähigen Funktionseinheit,
- Fig. 10: ein weiteres Ausführungsbeispiel eines Brennstoffzellensystems mit einer regenerationsfähigen Funktionseinheit,
- Fig. 11: ein weiteres Ausführungsbeispiel eines Brennstoffzellensystems mit einer regenerationsfähigen Funktionseinheit,
- Fig. 12: ein weiteres Ausführungsbeispiel eines Brennstoffzellensystems mit einer regenerationsfähigen Funktionseinheit und
- Fig. 13: ein weiteres Ausführungsbeispiel eines Brennstoffzellensystems mit einer regenerationsfähigen Funktionseinheit.

### Beschreibung der Ausführungsbeispiele

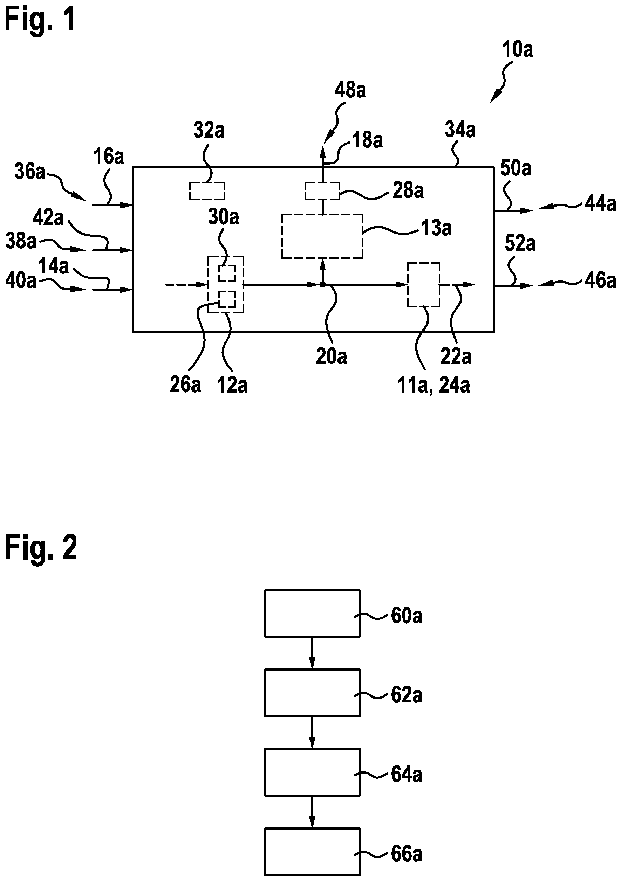

Figur 1 zeigt rein schematisch ein beispielhaftes, insbesondere als Blackbox dargestelltes, nicht erfindungsgemäßes Brennstoffzellensystem 10a. Das Brennstoffzellensystem 10a ist als ein System zu einer Gewinnung und/oder einer Bereitstellung von elektrischer und/oder thermischer Energie ausgebildet. Das Brennstoffzellensystem 10a dient dabei beispielsweise zum Einsatz in Gebäuden, insbesondere zur Erzeugung elektrischer Energie und/oder für Heizzwecke und/oder zur Warmwasserbereitung.

Das Brennstoffzellensystem 10a weist ein Gehäuse 34a auf. Das Gehäuse 34a ist als Außengehäuse ausgebildet. Das Gehäuse 34a ist als Aufnahmegehäuse ausgebildet. Das Gehäuse 34a ist geschlossen ausgebildet. Das Gehäuse 34a ist thermisch isoliert. Das Gehäuse 34a ist beispielhaft als Hotbox ausgebildet. Alter-nativ ist denkbar, auf ein Gehäuse vollständig zu verzichten.

Das Brennstoffzellensystem 10a umfasst mehrere Zuleitungen 36a, 38a, 40a. Die Zuleitungen 36a, 38a, 40a sind dabei mit dem Gehäuse 34a verbunden. Eine erste Zuleitung 36a der Zuleitungen 36a, 38a, 40a dient zu einer Zuführung eines Brennstoffs 16a, im vorliegenden Fall insbesondere Erdgas. Eine zweite Zuleitung 38a der Zuleitungen 36a, 38a, 40a dient zu einer Zuführung eines Oxidationsmittels 42a, im vorliegenden Fall insbesondere Luft. Eine dritte Zuleitung 40a der Zuleitungen 36a, 38a, 40a dient zu einer Zuführung eines Regenerationsmittels 14a, im vorliegenden Fall insbesondere einem sauerstoffhaltigen Gas, insbesondere Luft. Alternativ ist denkbar, auf wenigstens eine Zuleitung zu verzichten und ein Oxidationsmittel und ein Regenerationsmittel beispielsweise durch eine einzelne Zuleitung zuzuführen. Zudem könnte ein Brennstoffzellensystem weitere Zuleitungen beispielsweise für Wasser aufweisen.

Zudem umfasst das Brennstoffzellensystem 10a mehrere Ableitungen 44a, 46a, 48a. Die Ableitungen 44a, 46a, 48a sind dabei mit dem Gehäuse 34a verbunden. Eine erste Ableitung 44a der Ableitungen 44a, 46a, 48a ist als elektrische Leitung ausgebildet und dient zu einer Nutzung einer mittels des Brennstoffzellensystems 10a erzeugten elektrischen Energie 50a. Eine zweite Ableitung 46a der Ableitungen 44a, 46a, 48a dient zu einer Abführung eines, insbesondere bei einer Energieerzeugung entstehenden, Brennstoffzellenabgases 52a. Eine dritte Ableitung 48a der Ableitungen 44a, 46a, 48a dient zu einer Abführung eines, insbesondere durch das Regenerationsmittel 14a erzeugten, Regenerationsabgases 18a. Alternativ ist denkbar, auf wenigstens eine Ableitung zu verzichten und ein Brennstoffzellenabgas und ein Regenrationsabgas beispielsweise durch eine einzelne Ableitung abzuführen. Zudem könnte ein Brennstoffzellensystem weitere Ableitungen beispielsweise für Wasser, insbesondere eines Wärmerückgewinnungssystems, aufweisen.

Darüber hinaus weist das Brennstoffzellensystem 10a eine Vielzahl von Funktionseinheiten 11a, 12a, 13a auf. Die Funktionseinheiten 11a, 12a, 13a sind innerhalb des Gehäuses 34a angeordnet. Die Funktionseinheiten 11a, 12a, 13a werden in einem Normalbetriebsmodus zumindest von dem Brennstoff 16a durchströmt. Wenigstens eine der Funktionseinheiten 11a, 12a, 13a ist ferner als regenerationsfähige Funktionseinheit ausgebildet.

Eine erste Funktionseinheit 11a der Funktionseinheiten 11a, 12a, 13a ist als Brennstoffzelleneinheit 24a ausgebildet. Die Brennstoffzelleneinheit 24a ist hier vereinfacht als eine einzelne Brennstoffzelle dargestellt. Die Brennstoffzelleneinheit 24a ist im vorliegenden Fall als Festoxid-Brennstoffzelle (SOFC) ausgeführt. Die Brennstoffzelleneinheit 24a ist dazu vorgesehen, mit dem Brennstoff 16a und/oder einem Brennstoff-Gemisch und dem Oxidationsmittel 42a betrieben zu werden. Die Brennstoffzelleneinheit 24a ist dazu vorgesehen, zumindest den Brennstoff 16a mittels eines elektrochemischen Verfahrens umzusetzen und dabei insbesondere die elektrische Energie 50a zu erzeugen. Zu einer Zuführung des Brennstoffs 16a und/oder des Oxidationsmittels 42a ist die Brennstoffzelleneinheit 24a mittels wenigstens einer Fluidleitung 20a des Brennstoffzellensystems 10a mit der ersten Zuleitung 36a und/oder der zweiten Zuleitung 38a fluidtechnisch verbunden. Zudem ist die Brennstoffzelleneinheit 24a zur Abführung des Brennstoffzellenabgases 52a mittels wenigstens einer weiteren Fluidleitung 22a des Brennstoffzellensystems 10a mit der zweiten Ableitung 46a fluidtechnisch verbunden. Alternativ könnte eine Brennstoffzelleneinheit auch eine Mehrzahl von Brennstoffzellen umfassen. Zudem könnte eine Brennstoffzelleneinheit alternativ auch als eine alkalische Brennstoffzelle (AFC), als Polymerelektrolyt-Brennstoffzelle (PEMFC) und/oder als Magnesium-Luft-Brennstoffzelle (MAFC) ausgebildet sein.

Eine zweite Funktionseinheit 12a der Funktionseinheiten 11a, 12a, 13a ist als Entschwefelungseinheit ausgebildet. Die zweite Funktionseinheit 12a ist im vorliegenden Fall beispielhaft als Heißentschwefelungseinheit ausgebildet. Die zweite Funktionseinheit 12a weist eine Wirkverbindung mit der ersten Funktionseinheit 11a, insbesondere der Brennstoffzelleneinheit 24a, auf. Die zweite Funktionseinheit 12a ist fluidtechnisch vor der ersten Funktionseinheit 11a, insbesondere der Brennstoffzelleneinheit 24a, angeordnet. Die zweite Funktionseinheit 12a ist regenerationsfähig ausgebildet. Die zweite Funktionseinheit 12a ist zu einer Aufbereitung des Brennstoffs 16a vorgesehen. Die zweite Funktionseinheit 12a ist dazu vorgesehen, Schwefelverbindungen aus dem Brennstoff 16a zu entfernen. Im vorliegenden Fall ist die zweite Funktionseinheit 12a dazu vorgesehen, Schwefelverbindungen in dem Brennstoff 16a mit Wasserstoff in Schwefelwasserstoff zu wandeln, welches anschließend mit Zinkoxid zu Wasser und Zinksulfid reagiert. Das Zinkoxid entspricht dabei einem Funktionsmittel der zweiten Funktionseinheit 12a und wird insbesondere in dem Normalbetriebsmodus zumindest teilweise verbraucht. Alternativ könnte eine zweite Funktionseinheit jedoch auch als Kaltentschwefelungseinheit ausgebildet sein und/oder ein von Zinkoxid abweichendes Funktionsmittel umfassen. Zudem ist denkbar, eine zweite Funktionseinheit nicht regenerationsfähig auszubilden.

Weitere Funktionseinheiten 13a, welche im vorliegenden Fall nicht näher dargestellt sind, können beispielsweise als Reformereinheit, als Brennereinheit und/oder als weitere Reaktoren oder dergleichen ausgebildet sein und vorteilhaft zumindest teilweise regenerationsfähig ausgebildet sein.

Ferner umfasst das Brennstoffzellensystem 10a wenigstens eine Heizeinheit 26a. Die Heizeinheit 26a ist innerhalb des Gehäuses 34a angeordnet. Die Heizeinheit 26a weist eine Wirkverbindung mit der, insbesondere als Entschwefelungseinheit ausgebildeten, zweiten Funktionseinheit 12a auf. Die Heizeinheit 26a ist im vorliegenden Fall in die zweite Funktionseinheit 12a integriert. Die Heizeinheit 26a ist dabei zu einer Erhitzung des Regenerationsmittels 14a vorgesehen. Alternativ ist denkbar, eine Heizeinheit außerhalb einer zweiten Funktionseinheit anzuordnen. In diesem Fall ist die Heizeinheit vorteilhaft fluidtechnisch vor der zweiten Funktionseinheit angeordnet. Prinzipiell könnte auf eine Heizeinheit jedoch auch vollständig verzichtet werden. In diesem Fall ist beispielsweise denkbar, eine in einem Normalbetriebsmodus erzeugte Wärme und/oder Abwärme eines Brennstoffzellensystems und/oder einer Brennstoffzelleneinheit zu einer Erhitzung eines Regenerationsmittels zu verwenden.

Zudem umfasst das Brennstoffzellensystem 10a wenigstens eine Filtereinheit 28a. Die Filtereinheit 28a ist innerhalb des Gehäuses 34a angeordnet. Die Filtereinheit 28a weist eine Wirkverbindung mit der, insbesondere als Entschwefelungseinheit ausgebildeten, zweiten Funktionseinheit 12a auf. Die Filtereinheit 28a ist fluidtechnisch hinter der zweiten Funktionseinheit 12a angeordnet. Die Filtereinheit 28a ist dabei fluidtechnisch zwischen der zweiten Funktionseinheit 12a und der dritten Ableitung 48a angeordnet. Die Filtereinheit 28a ist zu einer Filterung des durch das Regenerationsmittel 14a erzeugten Regenerationsabgases 18a vorgesehen. Im vorliegenden Fall ist die Filtereinheit 28a zu einer Reduzierung und/oder Entfernung von, insbesondere bei einem Regenerationsvorgang gelösten, Schwefelverbindungen in dem Regenerationsabgas 18a vorgesehen. Alternativ oder zusätzlich könnte eine Filtereinheit auch zu einer Filterung von, insbesondere bei einem Regenerationsvorgang gelösten, Kohlenstoffverbindungen oder weiteren Schadstoffen vorgesehen sein. Zudem könnte prinzipiell auf eine Filtereinheit auch vollständig verzichtet werden.

Des Weiteren umfasst das Brennstoffzellensystem 10a wenigstens eine Detektionseinheit 30a. Die Detektionseinheit 30a ist innerhalb des Gehäuses 34a angeordnet. Die Detektionseinheit 30a weist eine Wirkverbindung mit der, insbesondere als Entschwefelungseinheit ausgebildeten, zweiten Funktionseinheit 12a auf. Die Detektionseinheit 30a ist im vorliegenden Fall beispielhaft in die zweite Funktionseinheit 12a integriert. Die Detektionseinheit 30a ist dazu vorgesehen, wenigstens eine Regenerationskenngröße zu erfassen, anhand welcher, insbesondere durch Abgleich mit einem Sollwertintervall, ermittelt werden kann, ob ein Regenerationsvorgang, im vorliegenden Fall insbesondere zur Regeneration der zweiten Funktionseinheit 12a, initiiert werden soll. Im vorliegenden Fall ist die Regenerationskenngröße dabei mit einem Betriebsparameter der zweiten Funktionseinheit 12a, beispielsweise mit einer Restmenge des Funktionsmittels der zweiten Funktionseinheit 12a, korreliert. Alternativ ist denkbar, eine Detektionseinheit außerhalb einer zweiten Funktionseinheit anzuordnen. Zudem ist denkbar, eine Detektionseinheit in eine Brennstoffzelleneinheit zu integrieren. Auch könnte eine Detektionseinheit dazu vorgesehen sein, eine Heizeffizienz oder dergleichen zu erfassen. Prinzipiell könnte auf eine Detektionseinheit jedoch auch vollständig verzichtet werden, beispielsweise falls ein Regenerationsvorgang in regelmäßigen zeitlichen Abständen ausgeführt wird.

Darüber hinaus umfasst das Brennstoffzellensystem 10a eine Regenerationseinheit 32a. Die Regenerationseinheit 32a ist dazu vorgesehen, ein Verfahren zur Regeneration des Brennstoffzellensystems 10a und im vorliegenden Fall insbesondere der zweiten Funktionseinheit 12a auszuführen. Die Regenerationseinheit 32a ist somit dazu vorgesehen, die zweite Funktionseinheit 12a in einem eingebauten Zustand mit dem Regenerationsmittel 14a zu beaufschlagen, zu fluten und/oder zu durchspülen und mittels des Regenerationsmittels 14a zumindest teilweise zu regenerieren. Alternativ könnte eine Regenerationseinheit jedoch auch zur zumindest teilweisen Regeneration einer, insbesondere als Brennstoffzelleneinheit ausgebildeten, ersten Funktionseinheit und/oder einer, insbesondere als Reformereinheit, als Brennereinheit und/oder als weitere Reaktoren oder dergleichen ausgebildeten, weiteren Funktionseinheit vorgesehen sein.

Figur 2 zeigt ein beispielhaftes Ablaufdiagramm des Verfahrens zur Regeneration des Brennstoffzellensystems 10a.

Ein Schritt 60a entspricht einem Normalbetriebsmodus. In dem Normalbetriebsmodus wird mittels der Brennstoffzelleneinheit 24a Energie erzeugt. Um die Komponenten des Brennstoffzellensystems 10a, wie beispielsweise nickelhaltige und/oder edelmetallhaltige Reformereinheiten und/oder eine Anode der Brennstoffzelleneinheit 24a, durch den Brennstoff 16a und insbesondere in dem Brennstoff 16a vorhandene Zusatzstoffe und/oder Hilfsstoffe, wie beispielsweise Odorierungsstoffe und/oder Schwefelverbindungen, nicht zu schädigen, wird der Brennstoff 16a durch zumindest einen Teil der Funktionseinheiten 12a, 13a aufbereitet. Im vorliegenden Fall wird der Brennstoff 16a dabei zumindest in der zweiten Funktionseinheit 12a aufbereitet, insbesondere entschwefelt, wobei die zweite Funktionseinheit 12a von dem Brennstoff 16a durchströmt wird. In der zweiten Funktionseinheit 12a werden Schwefelverbindungen in dem Brennstoff 16a mit Wasserstoff in Schwefelwasserstoff gewandelt, welches anschließend mit Zinkoxid zu Wasser und Zinksulfid reagiert. Das Zinkoxid, welches dem Funktionsmittel der zweiten Funktionseinheit 12a entspricht, wird dabei zumindest teilweise verbraucht. Zudem lagern sich in der zweiten Funktionseinheit 12a Reststoffe des Brennstoffs 16a an. Die Reststoffe entsprechen im vorliegenden Fall dem bei der Entschwefelung entstehenden Zinksulfid. Um eine hinreichende Entschwefelung über eine gesamte Lebensdauer des Brennstoffzellensystems 10a zu erreichen, muss die zweite Funktionseinheit 12a somit ausgetauscht oder, wie im vorliegenden Fall, regeneriert werden, wobei insbesondere das Funktionsmittel der zweiten Funktionseinheit 12a wiederhergestellt wird.

Ein Schritt 62a entspricht einem Detektionsvorgang, welcher insbesondere in regelmäßigen zeitlichen Abständen und/oder dauerhaft während des Normalbetriebsmodus und/oder in einem speziellen Detektionsbetriebsmodus erfolgen kann. Dabei wird mittels der Detektionseinheit 30a die Regenerationskenngröße erfasst und mit einem Sollwertintervall verglichen. Liegt die Regenerationskenngröße dabei außerhalb des Sollwertintervalls wird, bevorzugt zumindest teilweise automatisch und/oder automatisiert, ein Regenerationsvorgang initiiert. Alternativ könnte jedoch auch eine Warnmeldung ausgegeben werden, sodass bei einer Wartung ein Regenerationsvorgang gestartet werden kann. Prinzipiell könnte auf einen Detektionsvorgang auch verzichtet werden. In diesem Fall ist denkbar, eine zweite Funktionseinheit oder andere Funktionseinheiten in regelmäßigen zeitlichen Abständen, beispielsweise einmal in der Woche, einmal im Monat und/oder einmal im Jahr, zumindest teilweise zu regenerieren.

Liegt die Regenerationskenngröße außerhalb des Sollwertintervalls folgt Schritt 64a. In Schritt 64a wird der Normalbetriebsmodus beendet. Dabei wird das Brennstoffzellensystem 10a und/oder zumindest die Brennstoffzelleneinheit 24a heruntergefahren. Zudem kann mittels Ventilen ein Zuströmen des Brennstoffs 16a und/oder des Oxidationsmittels 42a blockiert werden. Anschließend wird ein von dem Normalbetriebsmodus verschiedener Regenerationsbetriebsmodus gestartet. Hierzu kann es erforderlich sein, die Filtereinheit 28a in das Brennstoffzellensystem 10a, beispielsweise in Form einer wechselbaren Filterkartusche, einzubauen. Bevorzugt ist die Filtereinheit 28a jedoch dauerhaft in das Brennstoffzellensystem 10a integriert. Zudem ist denkbar, das Brennstoffzellensystem 10a nicht komplett herunterzufahren. Insbesondere kann dabei in einem heißen Zustand, beispielsweise nach einem zügigen Abschalten der Brennstoffzelleneinheit 24a, der Regenerationsvorgang und/oder der Regenerationsbetriebsmodus gestartet werden, wodurch das Brennstoffzellensystem 10a vorteilhaft schnell wieder hochgefahren werden kann und/oder auf die Heizeinheit 26a vollständig verzichtet werden kann.

Ein Schritt 66a entspricht dem Regenerationsbetriebsmodus und/oder einem Regenerationsvorgang. Dabei wird die zweite Funktionseinheit 12a im eingebauten Zustand mittels des Regenerationsmittels 14a zumindest teilweise regeneriert. Im vorliegenden Fall wird die zweite Funktionseinheit 12a in regelmäßigen zeitlichen Abständen zumindest teilweise regeneriert, wodurch insbesondere die zweite Funktionseinheit 12a vorteilhaft klein dimensioniert und/oder ausgelegt werden kann, da eine reaktive Kapazität der zweiten Funktionseinheit 12a nicht über eine gesamte Einsatzdauer des Brennstoffzellensystems 10a benötigt wird.

Hierzu strömt das Regenerationsmittel 14a, im vorliegenden Fall insbesondere ein sauerstoffhaltiges Gas, durch die dritte Zuleitung 40a in das Gehäuse 34a. Anschließend wird das Regenerationsmittel 14a zumindest abschnittsweise durch die Fluidleitung 20a und/oder die weitere Fluidleitung 22a zu der zweiten Funktionseinheit 12a geleitet, wodurch vorteilhaft auf zusätzliche Fluidleitungen verzichtet werden kann. Insbesondere wird ein Strömungsweg des Regenerationsmittels 14a, beispielsweise mittels Ventilen, derart eingestellt, dass Komponenten, wie beispielsweise ein Rezi-Gebläse, welche durch das Regenerationsmittel 14a geschädigt werden können, ausgespart sind und/oder nicht von dem Regenerationsmittel 14a durchströmt werden. Die zweite Funktionseinheit 12a wird dann zur zumindest teilweisen Regeneration mit dem Regenerationsmittel 14a beaufschlagt, geflutet und/oder durchspült.

In der zweiten Funktionseinheit 12a wird das Regenerationsmittel 14a dann mittels der Heizeinheit 26a auf eine Regenerationstemperatur, im vorliegenden Fall insbesondere zumindest 480°C, erhitzt, sodass die Reststoffe des Brennstoffs 16a, im vorliegenden Fall insbesondere Zinksulfid, in der zweiten Funktionseinheit 12a oxidiert werden. Im vorliegenden Fall oxidiert das Zinksulfid zu Zinkoxid und Schwefeldioxid. Das entstehende Zinkoxid verbleibt als neues Funktionsmittel in der zweiten Funktionseinheit 12a. Das Schwefeldioxid entspricht dem Regenerationsabgas 18a.

Das Regenerationsabgas 18a wird anschließend zumindest abschnittsweise durch die Fluidleitung 20a und/oder die weitere Fluidleitung 22a zu der dritten Ableitung 48a geleitet. Insbesondere wird ein Strömungsweg des Regenerationsabgases 18a, beispielsweise mittels Ventilen, derart eingestellt, dass Komponenten, wie beispielsweise eine Anode der Brennstoffzelleneinheit 24a und/oder ein Rezi-Gebläse, welche durch das Regenerationsabgas 18a geschädigt werden können, ausgespart sind und/oder nicht von dem Regenerationsabgas 18a durchströmt werden. Vor einer Abführung des Regenerationsabgases 18a aus dem Brennstoffzellensystem 10a wird das Regenerationsabgas 18a zudem mittels der Filtereinheit 28a gefiltert, wodurch vorteilhaft Schwefelverbindungen aus dem Regenerationsabgas 18a entfernt werden können.

Das beispielhafte Ablaufdiagramm in Figur 2 soll dabei insbesondere lediglich beispielhaft ein Verfahren zur Regeneration eines Brennstoffzellensystems beschreiben. Insbesondere können einzelne Schritte und/oder eine Abfolge der Schritte variieren. Dabei ist insbesondere auch denkbar, auf einen Detektionsvorgang zu verzichten. Zudem ist denkbar, zusätzlich oder alternativ zu einer Entschwefelungseinheit, eine Brennstoffzelleneinheit, eine Reformereinheit und/oder einen weiteren Reaktor zumindest teilweise zu regenerieren.

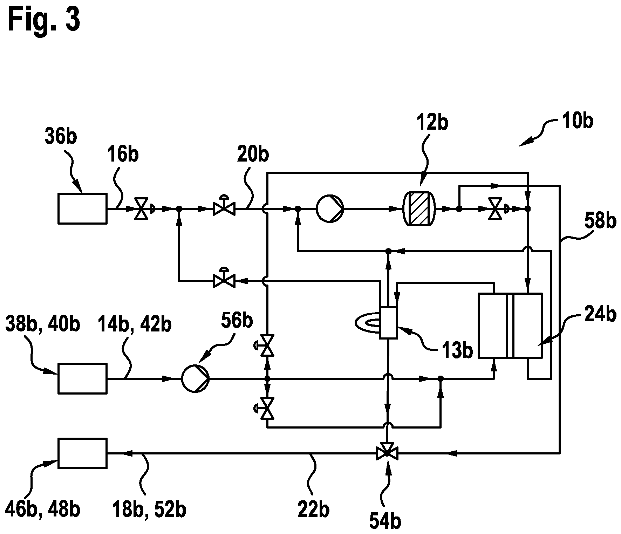

In den Figuren 3 bis 13 sind weitere Ausführungsbeispiele von erfindungsgemäßen und nicht erfindungsgemäßen Brennstoffzellensystemen gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 13 ist der Buchstabe a durch die Buchstaben b bis I ersetzt.

In Figur 3 ist ein, insbesondere detailliertes, Ausführungsbeispiel der Er-findung gezeigt. Dem Ausführungsbeispiel der Figur 3 ist der Buchstabe b nachgestellt.

Figur 3 zeigt ein Brennstoffzellensystem 10b mit einer Brennstoffzelleneinheit 24b in einem Regenerationsbetriebsmodus. In dem Regenerationsbetriebsmodus geöffnete Ventile sind dabei in Figur 3 parallel zu einer, insbesondere mittels Pfeilen angedeuteten, Strömungsrichtung ausgerichtet, während geschlossene Ventile senkrecht zu der Strömungsrichtung ausgerichtet sind.

Im vorliegenden Fall umfasst das Brennstoffzellensystem 10b zwei Zuleitungen 36b, 38b, 40b. Eine erste Zuleitung 36b der Zuleitungen 36b, 38b, 40b dient zu einer Zuführung eines Brennstoffs 16b. Eine zweite Zuleitung 38b, 40b der Zuleitungen 36b, 38b, 40b dient zu einer Zuführung eines Oxidationsmittels 42b und eines Regenerationsmittels 14b. Zur Förderung des Regenerationsmittels 14b ist ein Gebläse 56b des Brennstoffzellensystems 10b in dem Regenerationsbetriebsmodus in Betrieb.

Zudem umfasst das Brennstoffzellensystem 10b eine Ableitung 46b, 48b, welche zu einer Abführung eines Brennstoffzellenabgases 52b und eines Regenerationsabgases 18b dient. Das Brennstoffzellenabgas 52b und das Regenerationsabgas 18b werden dabei über ein als 3-Wege-Ventil ausgebildetes, Fluidventil 54b des Brennstoffzellensystem 10b zusammengeführt. Zudem ist ein Strömungsweg des Regenerationsabgases 18b derart gewählt, dass die Brennstoffzelleneinheit 24b ausgespart ist und/oder nicht von dem Regenerationsabgas 18b durchströmt wird.

Darüber hinaus ist eine regenerationsfähige Funktionseinheit 12b als Entschwefelungseinheit ausgebildet.

Im Regenerationsbetriebsmodus strömt das Regenerationsmittel 14b, im vorliegenden Fall insbesondere Luft, durch eine Kathode der Brennstoffzelleneinheit 24b, über eine als Brennereinheit ausgebildete Funktionseinheit 13b und anschließend durch zwei Brennstoffventile des Brennstoffzellensystems 10b und eine, insbesondere als Brennstoffzuleitung ausgebildete, Fluidleitung 20b in die Funktionseinheit 12b. Prinzipiell könnte das Regenerationsmittel 14b jedoch auch durch eine Anode der Brennstoffzelleneinheit 24b und über einen Rezirkulationspfad strömen. Nach der Regeneration der Funktionseinheit 12b strömt das durch das Regenerationsmittel 14b erzeugte Regenerationsabgas 18b durch eine Regenerationsabgasleitung 58b in eine, insbesondere als Abgasleitung ausgebildete, weitere Fluidleitung 22b, welche mit der Ableitung 46b, 48b verbunden ist.

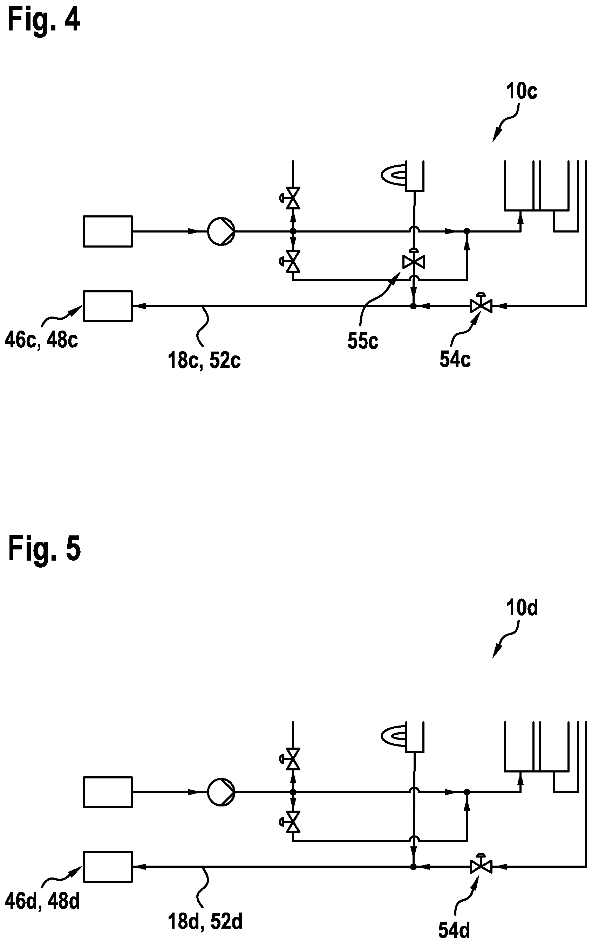

Die Figuren 4 bis 7 zeigen alternative Ausgestaltungen zu der in Figur 3 dargestellten Ausgestaltung und insbesondere zur Führung eines Regenerationsabgases.

In Figur 4 ist ein weiteres Ausführungsbeispiel der Erfindung gezeigt. Dem Ausführungsbeispiel der Figur 4 ist der Buchstabe c nachgestellt. Das weitere Ausführungsbeispiel der Figur 4 unterscheidet sich von den vorherigen Ausführungsbeispielen zumindest im Wesentlichen durch eine Führung eines Regenerationsabgases 18c.

In diesem Fall werden ein Brennstoffzellenabgas 52c und das Regenerationsabgas 18c über ein als 2-Wege-Ventil ausgebildetes, erstes Fluidventil 54c und ein als 2-Wege-Ventil ausgebildetes, zweites Fluidventil 55c eines Brennstoffzellensystem 10c zusammengeführt und mittels einer Ableitung 46c, 48c abgeführt.

In Figur 5 ist ein weiteres Ausführungsbeispiel der Erfindung gezeigt. Dem Ausführungsbeispiel der Figur 5 ist der Buchstabe d nachgestellt. Das weitere Ausführungsbeispiel der Figur 5 unterscheidet sich von den vorherigen Ausführungsbeispielen zumindest im Wesentlichen durch eine Führung eines Regenerationsabgases 18d.

In diesem Fall werden ein Brennstoffzellenabgas 52d und das Regenerationsabgas 18d über genau ein als 2-Wege-Ventil ausgebildetes, Fluidventil 54d eines Brennstoffzellensystem 10d zusammengeführt und mittels einer Ableitung 46d, 48d abgeführt.

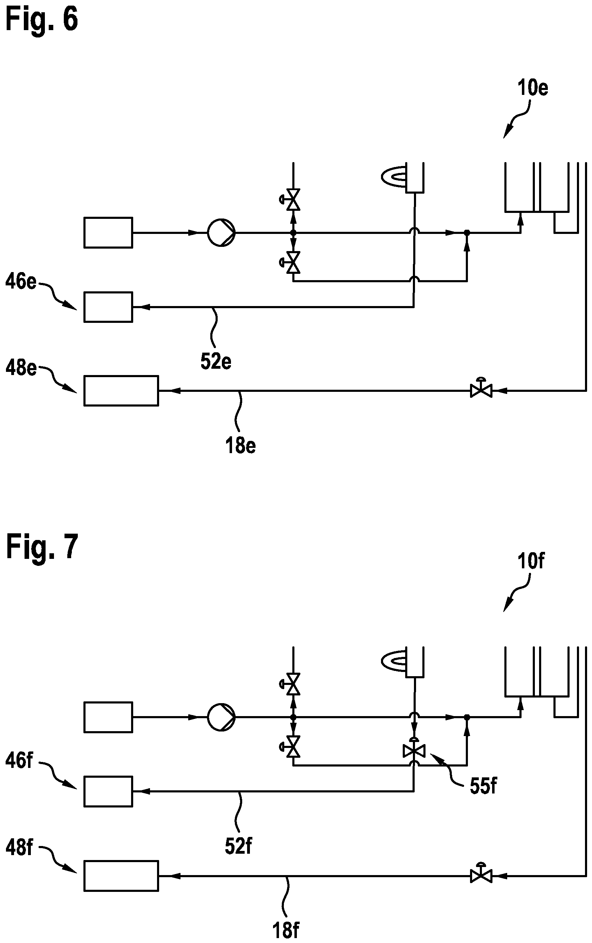

In Figur 6 ist ein nicht erfindungsgemäßes Ausführungsbeispiel eines Brennstoffzellensystems 10e gezeigt. Dem Ausführungsbeispiel der Figur 6 ist der Buchstabe e nachgestellt. Das weitere Ausführungsbeispiel der Figur 6 unterscheidet sich von den vorherigen Ausführungsbeispielen zumindest im Wesentlichen durch eine Führung eines Regenerationsabgases 18e.

In diesem Fall werden ein Brennstoffzellenabgas 52e und das Regenerationsabgas 18e nicht zusammengeführt, sondern mittels separater Ableitungen 46e, 48e des Brennstoffzellensystems 10e abgeführt.

In Figur 7 ist ein weiteres nicht erfindungsgemäßes Ausführungsbeispiel eines Brennstoffzellensystems 10f gezeigt. Dem Ausführungsbeispiel der Figur 7 ist der Buchstabe f nachgestellt. Das weitere Ausführungsbeispiel der Figur 7 unterscheidet sich von den vorherigen Ausführungsbeispielen zumindest im Wesentlichen durch eine Führung eines Regenerationsabgases 18f.

In diesem Fall werden ein Brennstoffzellenabgas 52f und das Regenerationsabgas 18f nicht zusammengeführt, sondern mittels separater Ableitungen 46f, 48f des Brennstoffzellensystems 10f abgeführt.

Zudem umfasst das Brennstoffzellensystem 10f ein als 2-Wege-Ventil ausgebildetes Fluidventil 55f welches zu einem Verschließen einer zweiten Ableitung 46f dient.

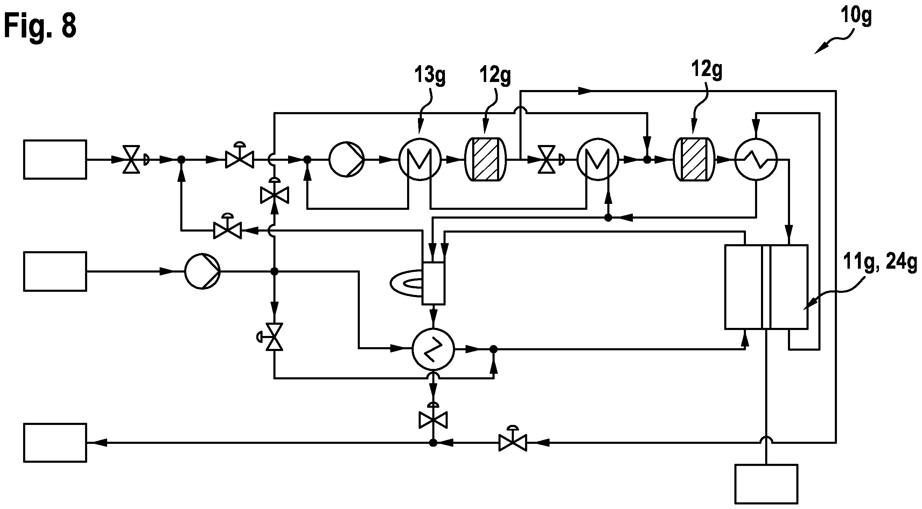

In Figur 8 ist ein weiteres Ausführungsbeispiel der Erfindung gezeigt. Dem Ausführungsbeispiel der Figur 8 ist der Buchstabe g nachgestellt. Das weitere Ausführungsbeispiel der Figur 8 unterscheidet sich von den vorherigen Ausführungsbeispielen zumindest im Wesentlichen durch eine Anzahl an Funktionseinheiten 11g, 12g, 13g eines Brennstoffzellensystems 10g und/oder durch eine Anodenabgasrezirkulation.

Im vorliegenden Fall umfasst das Brennstoffzellensystem 10g eine erste Funktionseinheit 11g, welche als Brennstoffzelleneinheit 24g ausgebildet ist. Zudem umfasst das Brennstoffzellensystem 10g zwei getrennt voneinander ausgebildete, regenerationsfähige Funktionseinheiten 12g, welche als Reaktoren ausgebildet sind. Darüber hinaus umfasst das Brennstoffzellensystem 10g mehrere weitere Funktionseinheiten 13g, wie beispielsweise mehrere Wärmetauscher.

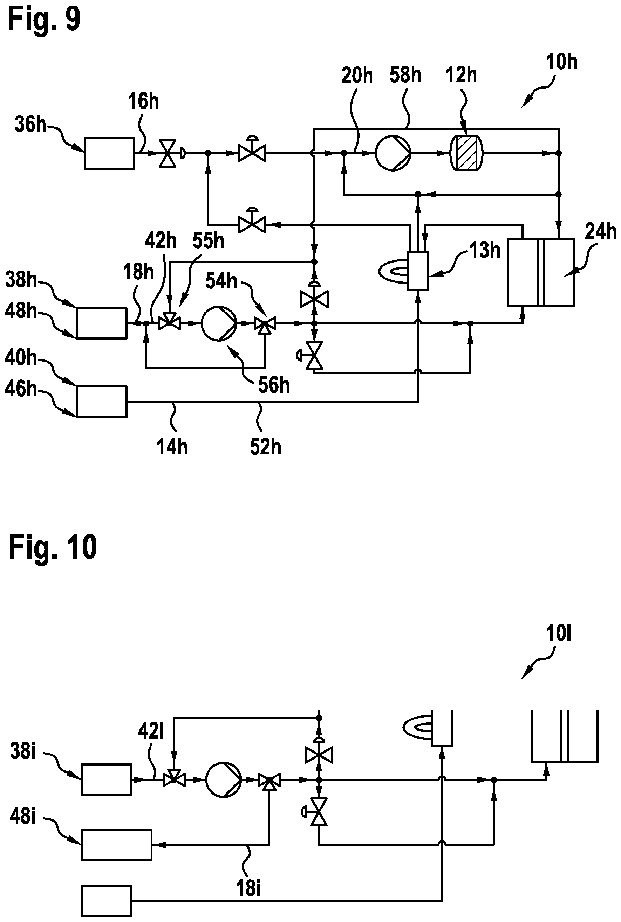

In Figur 9 ist ein weiteres nicht erfindungsgemäßes Ausführungsbeispiel eines Brennstoffzellensystems 10h gezeigt. Dem Ausführungsbeispiel der Figur 9 ist der Buchstabe h nachgestellt. Das weitere Ausführungsbeispiel der Figur 9 unterscheidet sich von den vorherigen Ausführungsbeispielen zumindest im Wesentlichen durch eine Führung eines Regenerationsmittels 14h und/oder eines Regenerationsabgases 18h.

Im vorliegenden Fall umfasst das Brennstoffzellensystem 10h eine regenerationsfähige Funktionseinheit 12h und eine Brennstoffzelleneinheit 24h.

Ferner dient eine erste Zuleitung 36h des Brennstoffzellensystems 10h zu einer Zuführung eines Brennstoffs 16h.

Eine zweite Zuleitung 38h des Brennstoffzellensystems 10h ist einstückig mit einer dritten Ableitung 48h des Brennstoffzellensystems 10h ausgebildet und dient in zumindest einem Betriebszustand zu einer Zuführung eines Oxidationsmittels 42h und in zumindest einem weiteren Betriebszustand zu einer Abführung des Regenerationsabgases 18h.

Eine dritte Zuleitung 40h des Brennstoffzellensystems 10h ist einstückig mit einer zweiten Ableitung 46h des Brennstoffzellensystems 10h ausgebildet und dient in zumindest einem Betriebszustand zu einer Zuführung des Regenerationsmittels 14h und in zumindest einem weiteren Betriebszustand zu einer Abführung eines Brennstoffzellenabgases 52h.

Zudem umfasst das Brennstoffzellensystem 10h zur Förderung des Oxidationsmittels 42h und/oder des Regenerationsabgases 18h zwei zusätzliche Fluidventile 54h, 55h, welche im vorliegenden Fall als 3-Wege-Ventile dargestellt sind, welche jedoch prinzipiell auch als 2-Wege-Ventile ausgebildet sein können.

Im Regenerationsbetriebsmodus wird das Regenerationsmittel 14h, im vorliegenden Fall insbesondere Luft, mittels eines Gebläses 56h durch die dritte Zuleitung 40h und/oder die zweiten Ableitung 46h über eine als Brennereinheit ausgebildete Funktionseinheit 13h und anschließend durch eine, insbesondere als Brennstoffzuleitung ausgebildete, Fluidleitung 20h in die Funktionseinheit 12h gesaugt. Nach der Regeneration der Funktionseinheit 12h strömt das durch das Regenerationsmittel 14h erzeugte Regenerationsabgas 18h durch eine Regenerationsabgasleitung 58h und durch die zweite Zuleitung 38h und/oder die dritte Ableitung 48h aus dem Brennstoffzellensystem 10h.

Die Figur 10 zeigt eine alternative nicht erfindungsgemäße Ausgestaltung zu der in Figur 9 dargestellten Ausgestaltung und insbesondere zur Führung eines Regenerationsabgases.

Dem Ausführungsbeispiel der Figur 10 ist der Buchstabe i nachgestellt. Das weitere Ausführungsbeispiel der Figur 10 unterscheidet sich von den vorherigen Ausführungsbeispielen zumindest im Wesentlichen durch eine Führung eines Regenerationsabgases 18i.

In diesem Fall ist eine zweite Zuleitung 38i eines Brennstoffzellensystems 10i getrennt von einer dritten Ableitung 48i des Brennstoffzellensystems 10i ausgebildet. Dabei werden ein Oxidationsmittel 42i und das Regenerationsabgas 18i mittels separater Leitungen, insbesondere der zweiten Zuleitung 38i und der dritten Ableitung 48i dem Brennstoffzellensystems 10i zugeführt bzw. abgeführt.

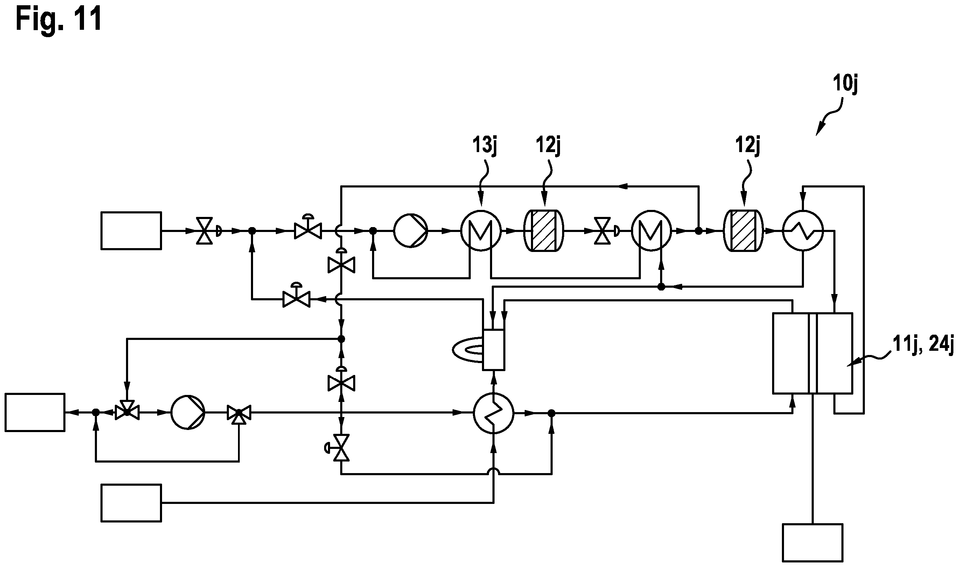

In Figur 11 ist ein weiteres nicht erfindungsgemäßes Ausführungsbeispiel eines Brennstoffzellensystems 10j gezeigt. Dem Ausführungsbeispiel der Figur 11 ist der Buchstabe j nachgestellt. Das weitere Ausführungsbeispiel der Figur 11 unterscheidet sich von den vorherigen Ausführungsbeispielen zumindest im Wesentlichen durch eine Anzahl an Funktionseinheiten 11j, 12j, 13j des Brennstoffzellensystems 10j.

Im vorliegenden Fall umfasst das Brennstoffzellensystem 10j eine erste Funktionseinheit 11j, welche als Brennstoffzelleneinheit 24j ausgebildet ist. Zudem umfasst das Brennstoffzellensystem 10j zwei getrennt voneinander ausgebildete, regenerationsfähige Funktionseinheiten 12j, welche als Reaktoren ausgebildet sind. Darüber hinaus umfasst das Brennstoffzellensystem 10j mehrere weitere Funktionseinheiten 13j, wie beispielsweise mehrere Wärmetauscher.

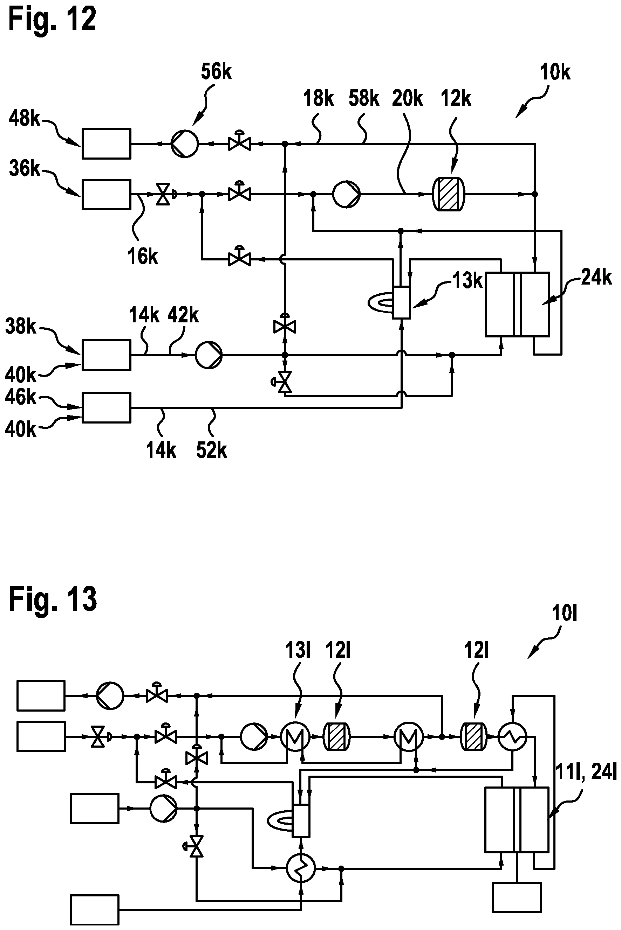

In Figur 12 ist ein weiteres nicht erfindungsgemäßes Ausführungsbeispiel eines Brennstoffzellensystems 10k gezeigt. Dem Ausführungsbeispiel der Figur 12 ist der Buchstabe k nachgestellt. Das weitere Ausführungsbeispiel der Figur 12 unterscheidet sich von den vorherigen Ausführungsbeispielen zumindest im Wesentlichen durch eine Führung eines Regenerationsabgases 18k.

Im vorliegenden Fall umfasst das Brennstoffzellensystem 10k eine regenerationsfähige Funktionseinheit 12k und eine Brennstoffzelleneinheit 24k.

Ferner dient eine erste Zuleitung 36k des Brennstoffzellensystems 10k zu einer Zuführung eines Brennstoffs 16k.

Eine zweite Zuleitung 38k des Brennstoffzellensystems 10k ist zumindest teilweise einstückig mit einer dritten Zuleitung 40k des Brennstoffzellensystems 10k ausgebildet und dient in zumindest einem Betriebszustand zu einer Zuführung eines Oxidationsmittels 42k und in zumindest einem weiteren Betriebszustand zu einer Zuführung eines Regenerationsmittels 14k.

Eine zweite Ableitung 46k des Brennstoffzellensystems 10k ist zumindest teilweise einstückig mit der dritten Zuleitung 40k ausgebildet und dient in zumindest einem Betriebszustand zu einer Abführung eines Brennstoffzellenabgases 52k und in zumindest einem weiteren Betriebszustand zu einer Zuführung des Regenerationsmittels 14k.

Ferner dient eine dritte Ableitung 48k des Brennstoffzellensystems 10k zu einer Abführung des Regenerationsabgases 18k.

Zudem umfasst das Brennstoffzellensystem 10k zur Förderung des Regenerationsabgases 18k ein zusätzliches als Regenerationsgebläse ausgebildetes Gebläse 56k. Das Gebläse 56k ist dabei in das Brennstoffzellensystem 10k fest integriert und/oder kann bei einer Wartung in das Brennstoffzellensystem 10k integriert werden. Insbesondere kann das Gebläse 56k dabei durch weitere Gebläse, wie beispielsweise ein Oxidationsmittelgebläse und/oder ein Rezirkulationsgebläse unterstützt und/oder entlastet werden.

Im Regenerationsbetriebsmodus wird das Regenerationsmittel 14k, im vorliegenden Fall insbesondere Luft, durch die dritte Zuleitung 40k und über eine als Brennereinheit ausgebildete Funktionseinheit 13k oder über eine Kathode der Brennstoffzelleneinheit 24k und die als Brennereinheit ausgebildete Funktionseinheit 13k und anschließend durch eine, insbesondere als Brennstoffzuleitung ausgebildete, Fluidleitung 20k in die Funktionseinheit 12k gefördert. Nach der Regeneration der Funktionseinheit 12k wird das durch das Regenerationsmittel 14k erzeugte Regenerationsabgas 18k mittels des Gebläses 56k durch eine Regenerationsabgasleitung 58k und durch die dritte Ableitung 48k aus dem Brennstoffzellensystem 10k gefördert.

In Figur 13 ist ein weiteres nicht erfindungsgemäßes Ausführungsbeispiel eines Brennstoffzellensystems 10l gezeigt. Dem Ausführungsbeispiel der Figur 13 ist der Buchstabe l nachgestellt. Das weitere Ausführungsbeispiel der Figur 13 unterscheidet sich von den vorherigen Ausführungsbeispielen zumindest im Wesentlichen durch eine Anzahl an Funktionseinheiten 11l, 12l, 13l des Brennstoffzellensystems 10l.

Im vorliegenden Fall umfasst das Brennstoffzellensystem 10l eine erste Funktionseinheit 111, welche als Brennstoffzelleneinheit 24l ausgebildet ist. Zudem umfasst das Brennstoffzellensystem 10l zwei getrennt voneinander ausgebildete, regenerationsfähige Funktionseinheiten 12l, welche als Reaktoren ausgebildet sind. Darüber hinaus umfasst das Brennstoffzellensystem 10l mehrere weitere Funktionseinheiten 13l, wie beispielsweise mehrere Wärmetauscher.

## Patentansprüche

1. Verfahren zur Regeneration eines Brennstoffzellensystems (10b; 10c; 10d), wobei das Brennstoffzellensystem (10b; 10c; 10d; 10g) wenigstens eine regenerationsfähige Funktionseinheit (12b; 12g) aufweist, wobei die Funktionseinheit (12b; 12g) in einem eingebauten Zustand mittels zumindest eines Regenerationsmittels (14b) zumindest teilweise regeneriert wird, **dadurch gekennzeichnet, dass** ein Brennstoffzellenabgas (52b; 52c; 52d) und ein Regenerationsabgas (18b; 18c; 18d) über ein als 3-Wege-Ventil ausgebildetes Fluidventil (54b) des Brennstoffzellensystems (10b) oder über ein als 2-Wege-Ventil ausgebildetes erstes Fluidventil (54c) und ein als 2-Wege-Ventil ausgebildetes zweites Fluidventil (55c) des Brennstoffzellensystems (10c) oder über genau ein als 2-Wege-Ventil ausgebildetes Fluidventil (54d) des Brennstoffzellensystems (10d) zusammengeführt und mittels einer Ableitung (46b, 48b; 46c, 48c; 46d, 48d) abgeführt werden.

2. Verfahren nach Anspruch 1, **dadurch gekennzeichnet, dass** als Regenerationsmittel (14b) ein Gas verwendet wird.

3. Verfahren nach Anspruch 1 oder 2, **dadurch gekennzeichnet, dass** das Regenerationsmittel (14b) Sauerstoff umfasst.

4. Verfahren nach einem der vorhergehenden Ansprüche, **dadurch gekennzeichnet, dass** die Funktionseinheit (12b; 12g) in zumindest einem Normalbetriebsmodus von zumindest einem Brennstoff (16b) durchströmt wird.

5. Verfahren nach Anspruch 4, **dadurch gekennzeichnet, dass** der Brennstoff (16b) in der Funktionseinheit (12b; 12g) aufbereitet wird.

6. Verfahren nach einem der vorhergehenden Ansprüche, **dadurch gekennzeichnet, dass** mittels des Regenerationsmittels (14b) wenigstens ein Reststoff zumindest eines Brennstoffs (16b) in der Funktionseinheit (12b; 12g) oxidiert wird.

7. Verfahren nach einem der vorhergehenden Ansprüche, **dadurch gekennzeichnet, dass** die Funktionseinheit (12b; 12g) als Entschwefelungseinheit ausgebildet ist.

8. Verfahren nach einem der vorhergehenden Ansprüche, **dadurch gekennzeichnet, dass** das Regenerationsmittel (14b) und/oder zumindest ein durch das Regenerationsmittel (14b) erzeugtes Regenerationsabgas (18b; 18c; 18d) zumindest abschnittsweise durch wenigstens eine mit einer Brennstoffzelleneinheit (24b) fluidtechnisch verbundene Fluidleitung (20b, 22b) geleitet wird.

9. Verfahren nach einem der vorhergehenden Ansprüche, **dadurch gekennzeichnet, dass** das Regenerationsmittel (14b) mittels wenigstens einer Heizeinheit auf eine Regenerationstemperatur erhitzt wird.

10. Verfahren nach einem der vorhergehenden Ansprüche, **dadurch gekennzeichnet, dass** zumindest ein durch das Regenerationsmittel (14b) erzeugtes Regenerationsabgas (18b; 18c; 18d) mittels wenigstens einer Filtereinheit gefiltert wird.

11. Verfahren nach einem der vorhergehenden Ansprüche, **dadurch gekennzeichnet, dass** die Funktionseinheit (12b; 12g) in einem von einem Normalbetriebsmodus verschiedenen Regenerationsbetriebsmodus zumindest teilweise regeneriert wird.

12. Verfahren nach einem der vorhergehenden Ansprüche, **dadurch gekennzeichnet, dass** mittels einer Detektionseinheit wenigstens eine Regenerationskenngröße erfasst wird und die Funktionseinheit (12b; 12g) zumindest teilweise regeneriert wird, falls die Regenerationskenngröße außerhalb eines Sollwertintervalls liegt.

13. Verfahren nach einem der vorhergehenden Ansprüche, **dadurch gekennzeichnet, dass** die Funktionseinheit (12b; 12g) in regelmäßigen zeitlichen Abständen zumindest teilweise regeneriert wird.

14. Brennstoffzellensystem (10b; 10c; 10d; 10g) zur Ausführung des Verfahrens nach einem der Ansprüche 1-13 mit zumindest einer regenerationsfähigen Funktionseinheit (12b; 12g) und mit einer Regenerationseinheit, welche dazu vorgesehen ist, ein Verfahren zur Regeneration des Brennstoffzellensystems (10b; 10c; 10d; 10g) auszuführen, in welchem die Funktionseinheit (12b; 12g) in einem eingebauten Zustand mittels zumindest eines Regenerationsmittels (14b) zumindest teilweise regeneriert wird, wobei die Regenerationseinheit dazu vorgesehen ist, die Funktionseinheit (12b; 12g) in einem eingebauten Zustand mit dem Regenerationsmittel (14b) zu beaufschlagen, zu fluten und/oder zu durchspülen und zu wenigstens einem Großteil zu regenerieren, **gekennzeichnet durch** eine Ableitung (46b, 48b; 46c, 48c; 46d, 48d), welche zu einer Abführung eines Brennstoffzellenabgases (52b; 52c; 52d) und eines Regenerationsabgases (18b; 18c; 18d) dient.

## Claims

1. Method for regenerating a fuel cell system (10b; 10c; 10d), wherein the fuel cell system (10b; 10c; 10d; 10g) has at least one functional unit (12b; 12g) capable of regeneration, wherein the functional unit (12b; 12g), in an installed state, is at least partially regenerated by means of at least one regeneration agent (14b), **characterized in that** a fuel cell exhaust gas (52b; 52c; 52d) and a regeneration exhaust gas (18b; 18c; 18d) are combined via a fluid valve (54b) of the fuel cell system (10b) designed as a 3-way valve or via a first fluid valve (54c) designed as a 2-way valve and a second fluid valve (55c) of the fuel cell system (10c) designed as a 2-way valve or via precisely one fluid valve (54d) of the fuel cell system (10d) designed as a 2-way valve and are discharged by means of a discharge line (46b, 48b; 46c, 48c; 46d, 48d).

2. Method according to Claim 1, **characterized in that** a gas is used as the regeneration agent (14b).

3. Method according to Claim 1 or 2, **characterized in that** the regeneration agent (14b) comprises oxygen.

4. Method according to any of the preceding claims, **characterized in that** at least one fuel (16b) flows through the functional unit (12b; 12g) in at least one normal operating mode.

5. Method according to Claim 4, **characterized in that** the fuel (16b) is treated in the functional unit (12b; 12g).

6. Method according to any of the preceding claims, **characterized in that** at least one residual substance of at least one fuel (16b) is oxidized in the functional unit (12b; 12g) by means of the regeneration agent (14b).

7. Method according to any of the preceding claims, **characterized in that** the functional unit (12b; 12g) is designed as a desulfurization unit.

8. Method according to any of the preceding claims, **characterized in that** the regeneration agent (14b) and/or at least one regeneration exhaust gas (18b; 18c; 18d) produced by the regeneration agent (14b) is conducted at least in portions by at least one fluid line (20b, 22b) fluidically connected to a fuel cell unit (24b).

9. Method according to any of the preceding claims, **characterized in that** the regeneration agent (14b) is heated to a regeneration temperature by means of at least one heating unit.

10. Method according to any of the preceding claims, **characterized in that** at least one regeneration exhaust gas (18b; 18c; 18d) produced by the regeneration agent (14b) is filtered by means of at least one filter unit.

11. Method according to any of the preceding claims, **characterized in that** the functional unit (12b; 12g) is at least partially regenerated in a regeneration operating mode different from a normal operating mode.

12. Method according to any of the preceding claims, **characterized in that** at least one regeneration characteristic variable is detected by means of a detection unit and the functional unit (12b; 12g) is at least partially regenerated if the regeneration characteristic variable lies outside a setpoint value interval.

13. Method according to any of the preceding claims, **characterized in that** the functional unit (12b; 12g) is at least partially regenerated at regular time intervals.

14. Fuel cell system (10b; 10c; 10d; 10g) for executing the method according to any of Claims 1-13 having at least one functional unit (12b; 12g) capable of regeneration and having a regeneration unit, which is provided for executing a method for regenerating the fuel cell system (10b; 10c; 10d; 10g), in which the functional unit (12b; 12g), in an installed state, is at least partially regenerated by means of at least one regeneration agent (14b), wherein the regeneration unit is intended to act on, flood and/or flush the functional unit (12b; 12g), in an installed state, with the regeneration agent (14b) and to regenerate at least a large portion of the functional unit, **characterized by** a discharge line (46b, 48b; 46c, 48c; 46d, 48d), which is used to discharge a fuel cell exhaust gas (52b; 52c; 52d) and a regeneration exhaust gas (18b; 18c; 18d).

## Revendications

1. Procédé de régénération d'un système de pile à combustible (10b ; 10c ; 10d), le système de pile à combustible (10b ; 10c ; 10d ; 10g) comprenant au moins une unité fonctionnelle (12b ; 12g) apte à se régénérer, l'unité fonctionnelle (12b ; 12g) étant au moins partiellement régénérée, à l'état monté, au moyen d'au moins un agent de régénération (14b), **caractérisée en ce qu'**un gaz d'échappement (52b ; 52c ; 52d) de pile à combustible et un gaz d'échappement (18b ; 18c ; 18d) de régénération sont réunis par une vanne de fluide (54b) du système de pile à combustible (10b) conçue sous la forme d'une vanne à 3 voies ou par une première vanne de fluide (54c) conçue sous la forme d'une vanne à 2 voies, et une deuxième vanne de fluide (55c) conçue sous la forme d'une vanne à 2 voies du système de pile à combustible (10c) ou par exactement une vanne de fluide (54d) du système de pile à combustible (10d) conçue sous la forme d'une vanne à 2 voies et évacués au moyen d'une conduite d'évacuation (46b, 48b ; 46c, 48c ; 46d, 48d).

2. Procédé selon la revendication 1, **caractérisé en ce qu'**un gaz est utilisé comme agent de régénération (14b).

3. Procédé selon la revendication 1 ou la revendication 2, **caractérisé en ce que** l'agent de régénération (14b) comprend de l'oxygène.

4. Procédé selon l'une des revendications précédentes, **caractérisé en ce que** l'unité fonctionnelle (12b ; 12g) est traversée par au moins un combustible (16b) dans au moins un mode de fonctionnement normal.

5. Procédé selon la revendication 4, **caractérisé en ce que** le combustible (16b) est traité dans l'unité fonctionnelle (12b ; 12g).

6. Procédé selon l'une des revendications précédentes, **caractérisé en ce qu'**au moins un résidu d'au moins un combustible (16b) est oxydé dans l'unité fonctionnelle (12b ; 12g) au moyen de l'agent de régénération (14b).

7. Procédé selon l'une des revendications précédentes, **caractérisé en ce que** l'unité fonctionnelle (12b ; 12g) est conçue sous la forme d'une unité de désulfuration.

8. Procédé selon l'une des revendications précédentes, **caractérisé en ce que** l'agent de régénération (14b) et/ou au moins un gaz d'échappement (18b ; 18c ; 18d) de régénération généré par l'agent de régénération (14b) sont conduits au moins partiellement par au moins une conduite de fluide (20b, 22b) reliée fluidiquement à une unité de pile à combustible (24b).

9. Procédé selon l'une des revendications précédentes, **caractérisé en ce que** l'agent de régénération (14b) est chauffé à une température de régénération au moyen d'au moins une unité de chauffage.

10. Procédé selon l'une des revendications précédentes, **caractérisé en ce qu'**au moins un gaz d'échappement (18b ; 18c ; 18d) de régénération généré par l'agent de régénération (14b) est filtré au moyen d'au moins une unité de filtrage.

11. Procédé selon l'une des revendications précédentes, **caractérisé en ce que** l'unité fonctionnelle (12b ; 12g) est au moins partiellement régénérée dans un mode de fonctionnement de régénération différent d'un mode de fonctionnement normal.

12. Procédé selon l'une des revendications précédentes, **caractérisé en ce qu'**au moyen d'une unité de détection, au moins une grandeur caractéristique de régénération est détectée et l'unité fonctionnelle (12b ; 12g) est au moins partiellement régénérée si la grandeur caractéristique de régénération se situe en dehors d'un intervalle de valeurs de consigne.

13. Procédé selon l'une des revendications précédentes, **caractérisé en ce que** l'unité fonctionnelle (12b ; 12g) est au moins partiellement régénérée à intervalles de temps réguliers.

14. Système de pile à combustible (10b ; 10c ; 10d ; 10g) pour la mise en œuvre du procédé selon l'une des revendications 1 à 13, comprenant au moins une unité fonctionnelle (12b ; 12g) apte à se régénérer et avec une unité de régénération qui est prévue pour mettre en œuvre un procédé de régénération du système de piles à combustible (10b ; 10c ; 10d ; 10g), dans lequel l'unité fonctionnelle (12b ; 12g) est au moins partiellement régénérée à l'état monté au moyen d'au moins un agent de régénération (14b), l'unité de régénération étant prévue pour alimenter, inonder et/ou rincer l'unité fonctionnelle (12b ; 12g) à l'état monté avec l'agent de régénération (14b) et pour la régénérer au moins en grande partie, **caractérisé par** une conduite d'évacuation (46b, 48b ; 46c, 48c ; 46d, 48d) qui sert à évacuer un gaz d'échappement (52b ; 52c ; 52d) de pile à combustible et un gaz d'échappement (18b ; 18c ; 18d) de régénération.
